(19) Europäisches Patentamt
European Patent Office
Office européen des brevets

(11) Veröffentlichungsnummer: **0 384 232 B1**

(12) # EUROPÄISCHE PATENTSCHRIFT

(45) Veröffentlichungstag der Patentschrift: **18.01.95**

(51) Int. Cl.$^6$: **C08K 3/02**, C08K 9/04, C08L 67/02, C08L 71/12, C08L 77/00

(21) Anmeldenummer: **90102531.2**

(22) Anmeldetag: **09.02.90**

(54) **Flammgeschützte thermoplastische Formmassen auf der Basis von phlegmatisiertem roten Phosphor.**

(30) Priorität: **18.02.89 DE 3905038**

(43) Veröffentlichungstag der Anmeldung:
**29.08.90 Patentblatt 90/35**

(45) Bekanntmachung des Hinweises auf die Patenterteilung:
**18.01.95 Patentblatt 95/03**

(84) Benannte Vertragsstaaten:
**BE CH DE ES FR GB IT LI NL**

(56) Entgegenhaltungen:
**DE-A- 2 754 515**

(73) Patentinhaber: **BASF Aktiengesellschaft**
**Carl-Bosch-Strasse 38**
**D-67063 Ludwigshafen (DE)**

(72) Erfinder: **Steiert, Peter, Dr.**
**Madenburgstrasse 10**
**D-6700 Ludwigshafen (DE)**
Erfinder: **Weiss, Hans-Peter, Dr.**
**Pfalzring 75**
**D-6704 Mutterstadt (DE)**
Erfinder: **Plachetta, Christoph, Dr.**
**Albert-Einstein-Allée 12**
**D-6703 Limburgerhof (DE)**
Erfinder: **Baierweck, Petra, Dr.**
**Sebastian-Kneipp-Strasse 19**
**D-6707 Schifferstadt (DE)**
Erfinder: **Muehlbach, Klaus, Dr.**
**Dr.-Heinrich-Winter-Strasse 19**
**D-6148 Heppenheim (DE)**
Erfinder: **Gareiss, Brigitte, Dr.**
**Schillerstrasse 65**
**D-6700 Ludwigshafen (DE)**

EP 0 384 232 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft flammgeschützte thermoplastische Formmassen, enthaltend

(A) 10 bis 99 Gew.% eines thermoplastischen Polyamids oder Polyesters oder Polyphenylenethers oder deren Mischungen,

(B) 1 bis 50 Gew.% einer Komponente B aus rotem Phosphor mit einer Teilchengröße bis zu 2 mm, welcher auf 100 Gewichtsteile des Phosphors 0,05 bis 5 Gewichtsteile eines Polyurethans oder Polyester-Polyurethans als Phlegmatisierungsmittel enthält, erhältlich durch Umsetzung einer wäßrigen Suspension des roten Phosphors mit einer wäßrigen Polyurethan- oder Polyester-Polyurethan-Dispersion,

(C) 0 bis 60 Gew.% eines faser- oder teilchenförmigen Füllstoffes oder Mischungen solcher Füllstoffe und

(D) 0 bis 20 Gew.% eines kautschukelastischen Polymerisats.

Außerdem betrifft die Erfindung die Verwendung dieser Formmassen zur Herstellung von Fasern, Folien und Formkörpern sowie die aus den erfindungsgemäßen Formassen erhältlichen Formkörper.

Bei der Einarbeitung von rotem Phosphor in Polymerschmelzen bestehen aufgrund der Staubbildung und Phosphinentwicklung sicherheitstechnische Probleme.

Aus der DE-A 27 03 052 sind flammfeste thermoplastische Formmassen bekannt, in denen der rote Phosphor durch Zusatz von Aluminium- oder Magnesiumsalzen der Ethylendiamintetraessigsäure (EDTA) oder Nitrilotriessigsäure (NTE) stabilisiert wurde.

Die Metallionen bewirken jedoch eine Verschlechterung der elektrischen Eigenschaften der Kunststofformteile, wodurch sich die Anwendungsbreite dieser Formteile reduziert.

Aus der EP-A 71 788 sind Polyamidformmassen bekannt, in denen der rote Phosphor mit Trägerharzen aus Phenol/Isobutyraldehyd oder Cyclohexanon vor der Einarbeitung beschichtet wurde.

Weitere phenolische Formaldehydträgerharze als Phosphorbeschichtungsmittel sind aus der DE-A 27 45 076 bekannt.

Bei der Einarbeitung eines derartig vorbehandelten Phosphors in die Polymerschmelze werden die Trägerharze teilweise abgebaut. Der dabei entstehende Formaldehyd reagiert mit den Thermoplasten, wodurch sich die mechanischen Eigenschaften der daraus herstellbaren Formkörper allgemein verschlechtern.

Weiterhin sind aus der DE-A 24 08 488 Wachs oder wachsähnliche Substanzen als Trägermaterial für roten Phosphor bekannt.

Zusätzlich sind aus der DE-A 26 25 674 epoxygruppenhaltige Verbindungen als Trägerharze für roten Phosphor bekannt.

Diese Trägerharze sind jedoch schlecht verträglich mit den Thermoplasten, wodurch die Einarbeitung erschwert wird (Agglomeratbildung) und die geringe Haftung zu einer Verschlechterung der mechanischen Eigenschaften der daraus herstellbaren Formkörper führt.

Der vorliegenden Erfindung lag daher die Aufgabe zugrunde leicht zugängliche flammgeschützte thermoplastische Polyamid- bzw. Polyesterformmassen zur Verfügung zu stellen, die ein gutes Brandverhalten bei gleichzeitig guten mechanischen Eigenschaften aufweisen. Darüber hinaus war auch die thermische Stabilität der eingesetzten Phosphorflammschutzkombination in ausreichendem Maße zu gewährleisten.

Demgemäß wurden die eingangs definierten flammgeschützten Formmassen gefunden.

Bevorzugte Formmassen dieser Art und ihre Verwendung sind den Unteransprüchen zu entnehmen.

Als Komponente (A) enthalten die erfindungsgemäßen Formmassen 10 bis 99, bevorzugt 10 bis 94 und insbesondere 15 bis 85 Gew.% eines thermoplastischen Polyamids oder Polyesters oder Polyphenylenethers oder deren Mischungen.

Allgemein werden Polyester auf der Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 30 mol.%, vorzugsweise nicht mehr als 10 mol.% der aromatischen

Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat und Polybutylenterephthalat bevorzugt.

Die relative Viskosität der Polyester (A) liegt im allgemeinen im Bereich von 1,2 bis 1,8 (gemessen in einer 0,5 gew.%igen Lösung in einem Phenol/o-Dichlorbenzolgemisch (Gew.-Verh. 1:1 bei 25 °C).

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol.% Isophthalsäure und 0 bis 95 mol.% Terephthalsäure, insbesondere etwa äquivalente Mischungen dieser beiden Säuren.

Die aromatischen Dihydroxyverbindungen haben vorzugsweise die allgemeine Formel I

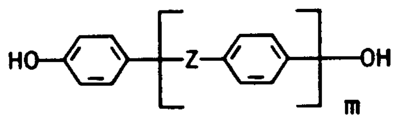

I

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 oder 1 hat. Die Verbindungen I können an den Phenylengruppen auch $C_1$-$C_6$-Alkylgruppen und Fluor, Chlor, oder Brom als Substituenten tragen.

Als Stammkörper dieser Verbindungen seien beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
Di-(hydroxyphenyl)sulfoxid,
α,α'-Di-(hydroxyphenyl)-dialkylbenzol,
Resorcin und
Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di(3',5'-dichlordihydroxyhenyl)propan,
1,1-Di-(4'-hydroxyphenyl)cyclohexan und
2,2-Di-(3',5'-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.% des Polyalkylenterephthtalates und 2 bis 80 Gew.% des vollaromatischen Polyesters.

Unter Polyestern im Sinne der vorliegenden Erfindung sollen auch Polycarbonate verstanden werden, die durch Polymerisation von aromatischen Dihydroxyverbindungen, insbesondere Bis-(4-hydroxyphenyl)-2,2-propan (Bisphenol A) oder dessen Derivaten, z.B. mit Phosgen erhältlich sind. Entsprechende Produkte sind an sich bekannt und in der Literatur beschrieben sowie größtenteils auch im Handel erhältlich. Die Menge der Polycarbonate beträgt 1 bis 70 Gewichtsteile, vorzugsweise 2 bis 60 Gewichtsteile, bezogen auf 100 Gewichtsteile Polyester der Komponente (A) der erfindungsgemäßen thermoplastischen Formmassen.

Die Polyamide der erfindungsgemäßen Formmassen weisen im allgemeinen eine relative Viskosität $\eta_{rel}$ von 1,7 bis 5,0 auf, bestimmt in einer 1 gew.%igen Lösung in 96 gew.%iger Schwefelsäure bei 25 °C, was einem K-Wert (nach Fikentscher) von 50 bis 96 entspricht. Polyamide mit einer relativen Viskosität von 2,3 bis 4,5, insbesondere von 2,5 bis 4,0 werden bevorzugt verwendet.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam.

Weiterhin sind Polyamide, die durch Copolymerisation zweier oder mehrerer der vorgenannten Monomeren erhältlich sind, oder Mischungen mehrerer Polyamide geeignet.

Beispielhaft erwähnt seien teilaromatische Copolyamide, insbesondere solche, deren Einheiten sich von Terephthalsäure und Hexamethylendiamin, von Adipinsäure und Hexamethylendiamin oder von Terephthalsäure, Hexamethylendiamin und $\epsilon$-Caprolactam ableiten. Insbesondere sind hierbei Copolyamide zu nennen, deren Triamingehalt (Gehalt an Bis-hexamethylentriamin) unter 0,5 Gew.% liegt. Entsprechende Produkte sind in Anlehnung an das in den EP-A 129 195 und 129 196 beschriebene Verfahren erhältlich.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Die in den erfindungsgemäßen Formmassen enthaltenen Polyphenylenether A sind an sich bekannt. Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylen)ether,Poly(2,6-diphenyl-1,4-phenylen)ether, Poly(2,6-dimethoxi-1,4-phenylen)ether, Poly(2,6-diethoxi-1,4-polyphenylen)ether, Poly(2-methoxi-6-methoxi-1,4-phenylen)ether, Poly(2-ethyl-6-stearyloxi-1,4-phenylen)ether, Poly(2,6-dichlor-1,4-phenylen)-ether, Poly(2-methyl-6-phenylen-1,4-phenylenether, Poly(2,6-dibenzyl-1,4-phenylen)ether, Poly(2-ethoxi-1,4-phenylen)ether, Poly(2-chlor-1,4-phenylen)ether, poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether und Poly(2-ethyl-6-propyl-1,4-phenylen)ether.

Unter Polyphenylenethern im Sinne der Erfindung sollen auch solche verstanden werden, die mit Monomeren wie Fumarsäure, Maleinsäure oder Maleinsäureanhydrid modifiziert sind.

Solche modifizierten Polyphenylenether sind an sich bekannt. Üblicherweise wird der Polyphenylenether $B_1$ durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert. Die Modifizierung wird im allgemeinen durch Umsetzung eines Polyphenylenethers mit einem Modifiziermittel, das mindestens eine der oben genannten Gruppen enthält, in Lösung (WO-A 86/2086), in wäßriger Dispersion, in einem Gasphasenverfahren (EP-A 25 200) oder in der Schmelze gegebenenfalls in Gegenwart von geeigneten vinylaromatischen Polymeren oder Schlagzähmodifiern durchgeführt. Geeignete Modifiziermittel sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$-$C_8$-Alkanolen, die Mono- oder Diamine dieser Säuren, N-Phenylmaleinimid, Maleinhydrazid, das Säurechlorid des Trimellitsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Solche modifizierten Polyphenylenether sind z.B. bekannt aus US-A 4 097 556, JP-A 59/59 724, WO-A 85/5372, WO-A 86/2086, WO-A 87/00540, EP-A 25 200, EP-A 121 974, EP-A 222 246, EP-A 222 250, EP-A 223 115, EP-A 223 116, EP-A 226 002, EP-A 253 123, EP-A 253 334, EP-A 254 048, EP-A 266 055 und aus den deutschen Patentanmeldungen P 38 12 946.9, P 38 12 947.7 und P 37 36 851.6. Dabei können in einigen Fällen Radikalstarter zugegen sein, in anderen nicht.

Hinsichtlich der physikalischen Eigenschaften der Polyphenylenether werden solche bevorzugt, die eine Grenzviskosität von 0,4 bis 0,7 dl/g, gemessen in Choroform bei 30 °C, aufweisen.

Es können auch Mischungen von Polyestern mit Polyamiden als Komponente (A) der erfindungsgemäßen Formmassen eingesetzt werden. Das Mischungsverhältnis Polyamid:Polyester ist im allgemeinen beliebig.

Weiterhin können auch Mischungen von Polyethern oder Polyamiden mit Polyphenylenethern als Komponente (A) eingesetzt werden, wobei das Mischungsverhältnis der Polymeren beliebig ist.

Bevorzugt werden Polyamide mit modifizierten Polyphenylenethern gemischt, wobei das Mischungsverhältnis vorzugsweise 20:80 bis 80:20, insbesondere von 40:60 bis 60:40 beträgt.

Als Komponente (B) enthalten die erfindungsgemäßen Formmassen 1 bis 50, bevorzugt 1 bis 20 und insbesondere 2 bis 15 Gew.% roten Phosphor, welcher auf 100 Gewichtsteile des Phosphors 0,05 bis 5, bevorzugt 0,5 bis 1,5 Gewichtsteile eines Polyurethans oder Polyester-Polyurethans als Phlegmatisierungsmittel enthält, erhältlich durch Umsetzung einer wäßrigen Suspension des roten Phosphors mit einer wäßrigen Polyurethan- oder Polyester-Polyurethan-Dispersion.

Die mittlere Teilchengröße ($d_{50}$) der in den Formmassen verteilten Phosphorpartikel liegt bevorzugt im Bereich von 0,0001 bis 0,5 mm.

Die Herstellung der wäßrigen Polyurethan- bzw. Polyester-Polyurethandispersionen erfolgt im allgemeinen nach dem in der DE-A 26 45 779 beschriebenen Verfahren.

Die Phlegmatisierung erfolgt vorzugsweise durch Umsetzung einer wäßrigen Suspension des roten Phosphors mit einer wäßrigen Polyurethan-Dispersion. Vorzugsweise enthält die wäßrige Suspension bis zu 75 Gewichtsteile roten Phosphor, die wäßrige Polyurethandispersion bis zu 40 Gewichtsteile des als Phlegmatisierungsmittel dienenden Polyurethans.

Der pH-Bereich der Phosphorsuspension beträgt in der Regel von 5 bis 9. Vorteilhaft wendet man eine Reaktionstemperatur von 20 bis 90 °C, insbesondere 25 bis 85 °C an.

Die Verweilzeit beträgt vorzugsweise 0,5 bis 3 Stunden, wonach der Phosphor abgetrennt wird und im Inertgasstrom, z.B. Stickstoffstrom, bei Temperaturen von 80 bis 120 °C getrocknet wird.

In der Regel kann der phlegmatisierte Phosphor in Pulverform leicht in die erfindungsgemäßen Formmassen eingearbeitet werden.

Außerdem sind Konzentrate von phlegmatisiertem roten Phosphor, z.B. in einem Polyamid oder einem Elastomeren geeignet.

Als weiteren Bestandteil können die erfindungsgemäßen Formmassen 0 bis 60, vorzugsweise 5 bis 50 und insbesondere 20 bis 50 Gew.% eines faser- oder teilchenförmigen Füllstoffes (Komponente (C)) oder deren Mischungen enthalten.

Bevorzugte faserförmige Verstärkungsstoffe (Komponente (C)) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 15 Gew.% Glasfasern mit 15 Gew.% Wollastonit und 15 Gew.% Glasfasern mit 15 Gew.% Talkum.

Als Komponente (D) enthalten die erfindungsgemäßen thermoplastischen Formmassen bis zu 20, vorzugsweise bis zu 15 Gew.-% eines kautschukelastischen Polymerisats.

Bevorzugte kautschukelastische Polymerisate sind Polymerisate auf Basis von Olefinen, die aus folgenden Komponenten aufgebaut sind:

$d_1$) 40-100 Gew.-% mindestens eines α-Olefins mit 2-8 C-Atomen

$d_2$) 0- 50 Gew.-% eines Diens

$d_3$) 0- 45 Gew.-% eines primären oder sekundären $C_1$-$C_{12}$-Alkylesters der Acrylsäure oder Methacrylsäure oder Mischungen derartiger Ester

$d_4$) 0- 40 Gew.-% eines säurefunktionellen und/oder eines latent säurefunktionellen Monomeren einer ethylenisch ungesättigten Mono- oder Dicarbonsäure

$d_5$) 0- 40 Gew.-% eines Epoxygruppen enthaltenden Monomeren,

$d_6$) 0- 5 Gew.-% sonstiger radikalisch polymerisierbarer Monomeren,

mit der Maßgabe, daß die Komponente (D) kein Olefinhomopolymerisat ist, denn hiermit, z.B. mit Polyethylen, erzielt man die vorteilhaften Wirkungen nicht in gleichem Maße.

Als erste bevorzugte Gruppe sind die sogenannten Ethylen-Propylen-(EPM)-bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI + 4/100 ° C) solcher, vorzugsweise unvernetzter, EPM- bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 ° C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere $d_2$) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tri-cyclo-(5.2.1.0.2.6)-3,8-decadien oder deren Mischungen genannt. Bevorzugt werden Hexa-1,5-dien-5-Ethylidennorbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von α-Olefinen mit 2-8 C-Atomen, insbesondere des Ethylens, mit $C_1$-$C_{18}$-Alkylestern der Acrylsäure und/oder Methacrylsäure.

Grundsätzlich eignen sich alle primären, sekundären und tertiären $C_1$-$C_{18}$-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester $d_3$) an den Olefinpolymerisaten beträgt 0-60, vorzugsweise 10-50 und insbesondere 30-45 Gew.-%.

Anstelle der Ester $d_3$) oder zusätzlich zu diesen können in den Olefinpolymerisaten auch säurefunktionelle und/oder latent säurefunktionelle Monomere ethylenisch ungesättigter Mono- oder Dicarbonsäuren $d_4$) oder Epoxygruppen aufweisende Monomere $d_5$) enthalten sein.

Als Beispiele für Monomere $d_4$) seien Acrylsäure, Methacrylsäure, tertiäre Alkylester dieser Säuren, insbesondere tert.-Butylacrylat und Dicarbon-Säuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre $C_1$-$C_{12}$-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut.

$$R_1C(COOR_2) = C(COOR_3)R_4 \qquad (I)$$

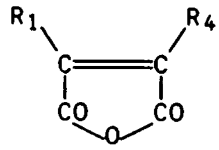

(II)

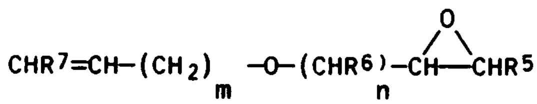

(III)

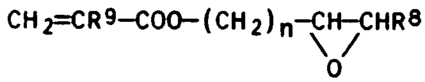

(IV)

wobei die Reste $R^1$ - $R^9$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für $R^1$ - $R^7$ ist Wasserstoff, für m der Wert 0 oder 1 und für n der Wert 1. Die entsprechenden Verbindungen sind Maleinsäure, Fumarsäure, Maleinsäureanhydrid, $d_4$) bzw. Alkenylglycidylether oder Vinylglycidylether $d_5$).

Bevorzugte Verbindungen der Formeln I, II, III und IV sind Maleinsäure und Maleinsäureanhydrid als Komponente $d_4$) und Epoxygruppen-enthaltende Ester der Acrylsäure und/oder Methacrylsäure, wobei Glycidylacrylat und Glycidylmethacrylat (als Komponente $d_5$) besonders bevorzugt werden.

Der Anteil der Komponenten $d_4$) bzw. $d_5$) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus

50 bis 98,9, insbesondere 60 bis 95 Gew.% Ethylen,

0,1 bis 20, insbesondere 0,15 bis 15 Gew.% Glycidylacrylat und/oder Glycidylmethacrylat, Acrylsäure und/oder Maleinsäureanhydrid,

1 bis 45, insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Als sonstige Monomere $d_6$) kommen z.B. Vinylester und Vinylether in Betracht.

Bei der Verwendung solcher Olefinpolymerisate beträgt deren Anteil bevorzugt 0 bis 20, insbesondere 4 bis 18 und ganz besonders 5 bis 15 Gew.-%, bezogen auf das Gesamtgewicht der Komponenten (A) bis (D).

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190 °C und 2,16 kg Belastung).

Außer den vorstehenden bevorzugten kautschukelastischen Polymerisaten auf Basis von Olefinen eignen sich als Elastomere (D) beispielsweise die folgenden Polymerisate.

In erster Linie sind hier Emulsionspolymerisate zu nennen, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung des Kautschukteils der Elastomeren seien Acrylate wie n-Butylacrylat und 2-Ethylhexylacrylat, entsprechende Methacrylate, Butadien und Isopren sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im allgemeinen durch Polymerisation von Styrol, Acrylnitril, Methacrylnitril, $\alpha$-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

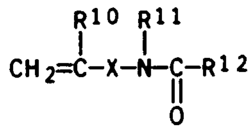

eingeführt werden können,
wobei die Substituenten folgende Bedeutung haben können:

- $R^{10}$ Wasserstoff, oder eine $C_1$-$C_4$-Alkylgruppe,
- $R^{11}$ Wasserstoff, eine $C_1$-$C_8$-Alkylgruppe oder eine Arylgruppe, insbesondere Phenyl,
- $R^{12}$ Wasserstoff, eine $C_1$-$C_{10}$-Alkyl-, eine $C_6$-$C_{12}$-Arylgruppe oder $OR^{13}$,
- $R^{13}$ eine $C_1$-$C_8$-Alkyl- oder $C_6$-$C_{12}$-Arylgruppe, die gegebenenfalls mit O- oder N-haltigen Gruppen substituiert sein können,
- X eine chemische Bindung, eine $C_1$-$C_{10}$-Alkylen- oder $C_6$-$C_{12}$-Arylengruppe oder

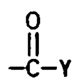

- Y O-Z- oder NH-Z und
- Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentodienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine Doppelbindung mit etwa gleicher Geschwindigkeit wie die übrigen Monomeren polymerisiert, während der restliche Teil der Doppelbindungen deutlich langsamer polymerisiert. Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (D) bis zu 5 Gew.%, vorzugsweise nicht mehr als 3 Gew.%, bezogen auf (D).

Im folgenden seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| D/1 | Buta-1,3-dien, Isopren, n-Butylacrylat, Ethylhexylacrylat oder deren Mischungen | Styrol, Acrylnitril, Methylmethacrylat |
| D/2 | wie A aber unter Mitverwendung von Vernetzern | wie A |
| D/3 | wie A oder B | n-Butylacrylat, Ethylacrylat, Methylacrylat, Buta-1,3-dien, Isopren, Ethylhexylacrylat |
| D/4 | wie A oder B | wie A oder C aber unter Mitverwendung von Monomeren mit reaktiven Gruppen wie hierin beschrieben |
| D/5 | Styrol, Acrylnitril, Methylmethacrylat oder deren Mischungen | erste Hülle aus Monomeren wie unter A und B für den Kern beschrieben zweite Hülle wie unter A oder C für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere (D) können auch nach anderen üblichen Verfahren, z.B. durch Suspensionspolymerisation, hergestellt werden.

Als weitere Kautschuke sind solche zu nennen, die den Polyphenylenether B schlagzäh modifizieren.

Beispielhaft seien thermoplastische Kautschuke, wie Polybutadien-, Polybuten-, Polyisopren-, Acrylnitrilbutadien-, Ethylenpropylen-, Polyester- oder Ethylenkautschuke und elastomere Copolymere aus Ethylen und Estern der (Meth)acrylsäure, z.B. Ethylenbutylacrylatcopolymere erwähnt. Weiterhin seien genannt Ionomere, Polyoctenylene und vorzugsweise Styrol-Butadien-Blockcopolymere einschließlich AB-, ABA-, und ABAB-Blockcopolymere, die auch verschmierte Übergänge haben können, Sternblockcopolymere und ähnliche, analoge Isoprenblockcopolymerisate und (teil)hydrierte Blockcopolymerisate. Diese Kautschuke können auch in mit vinylaromatischen Monomeren wie Styrol gepfropfter Form eingesetzt werden (EP-A 234 063 und US-A 4 681 915).

Die Kautschuke D weisen vorzugsweise eine Glasübergangstemperatur von unter -30 °C, insbesondere von unter -40 °C auf. Es versteht sich, daß auch Mischungen der vorstehend aufgeführten Kautschuktypen eingesetzt werden können.

Neben den wesentlichen Komponenten (A) und (B) und gegebenenfalls (C) und (D) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.%, bezogen auf das Gesamtgewicht der Komponenten (A) bis (D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des

Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Für Polyamid/Polyphenylenethermischungen werden bevorzugt Mischungen der Komponente B) mit einer vorzugsweise halogenfreien Phosphorverbindung verwendet. Das Mischungsverhältnis beträgt im allgemeinen von 8:2 bis 2:8, vorzugsweise von 7:3 bis 3:7. Solche Phosphorverbindungen sind generell bekannt, z.B. aus der deutschen Patentanmeldung P 37 32 907.3.

Geeignte phosphorhaltige Verbindungen sind die Verbindungen der allgemeinen Struktur

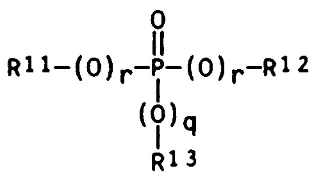

I

in der $R^{11}$, $R^{12}$ und $R^{13}$ aliphatische Reste, Aralkyl- oder Alkylarylreste mit bis zu 20 C-Atomen, die ihrerseits durch Halogen wie Chlor oder Brom substituiert sein können, sind. q und r sind null oder eins. Bevorzugt sind dabei die halogenfreien Verbindungen. Beispielhaft seien genannt Phenyl-bis-dodecylphosphat, Phenyl-bis(3,5,5-trimethylhexyl)-phosphat,Ethyldiphenylphosphat, (2-Ethylhexyl)-dikresylphosphat, Bis(2-ethylhexyl)-para-kresylphosphat, Bis(2-ethylhexyl)-phenylphosphat, Dinonyl-phenylphosphat, Phenylmethylhydrogenphosphat, Didodecyl-para-kresylphosphat, p-Kresyl-bis(2,5,5-trimethylhexyl)-phosphat, (2-Ethylhexyl)-diphenylphosphat, Tri(2,6-dimethylphenyl)-phosphat, Triphenylphosphat, Trikresylphosphat, Diphenyl-(2-ethylkresyl)-phosphat, Diphenyl-kresyl-phosphat, Tri(isopropylphenyl)-phosphat, Methylphosphonsäurediphenylester, Phenylphosphonsäurediphenylester, Triphenylphosphinoxid, Trikresylphosphinoxid, Tri-(2,6-dimethylphenyl)-phosphinoxid, Tri(2-chlorethyl)-phosphat und Tri(2,3-dibrompropyl)-phosphat. Besonders bevorzugte Komponenten F sind Triphenylphosphat und Triphenylphosphinoxid, sowie diese durch bis zu 3 Isopropylreste substituierten Verbindungen.

Daneben sind auch Verbindungen der allgemeinen Formeln II und III geeignet

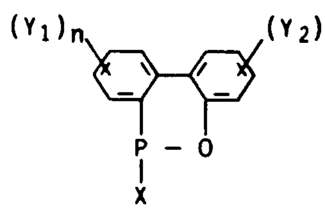

II

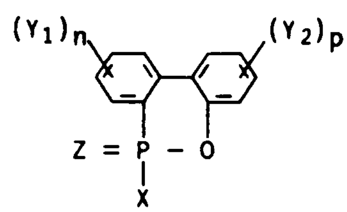

III ,

wobei X Wasserstoff, eine Hydroxylgruppe, eine Aminogruppe, eine $C_1$- bis $C_{10}$-Alkylgruppe, eine $C_1$- bis $C_{10}$-Alkoxygruppe oder eine $C_1$- bis $C_{10}$-Allyloxygruppe, $Y_1$ und $Y_2$ $C_1$- bis $C_8$-Alkyl- oder Alkoxygruppen, Z Sauerstoff oder Schwefel und n und p ganze Zahlen von 0 bis 4 darstellen.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die erfindungsgemäßen Formmassen zeichnen sich durch eine hervorragende Stabilität sowie durch ihre guten mechanischen Eigenschaften aus, die durch eine verbesserte Verteilung der Flammschutzkomponente erzielt werden kann. Zusätzlich weisen sie eine gute Flammbeständigkeit auf.

Ihre Herstellung und Verarbeitung erfolgt weitgehend problemlos, da der rote Phosphor mit Phlegmatisierungsmittel in kaum nennenswertem Maße zu Agglomeratbildungen und elektrostatischer Aufladung neigt.

Infolge dieses Eigenschaftsspektrums eignen sich die sich aus den erfindungsgemäßen Formmassen herstellbaren Formkörper besonders für den Elektrosektor, Kraftfahrzeug- und Baubereich.

Glasfaserverstärkte Formkörper werden vor allem als Gehäuse- oder Schalterteile in elektrischen und elektronischen Bauteilen verwenden.

Beispiele

Ausgangskomponenten

Komponente (A1)

Polyhexamethylenadipinsäureamid mit einem K-Wert nach Fikentscher von 70; gemessen in einer 1 gew.%igen Lösung von 96 gew.%iger Schwefelsäure bei 25 °C. Dieser K-Wert entspricht einer relativen Viskosität von 2,5 oder einer Viskositätszahl von 133.

Komponente (A2)

Ein modifizierter Polyphenylenether aus
88 Gew.-% Poly(2,6-dimethyl-1,4-phenylen)ether ($\eta_{red}$ = 0,63, gemessen in einer 1 gew.-%igen Lösung in Chloroform bei 25 °C),
10 Gew.-% Polystyrol (Schmelzfließindex MFI bei 200 °C/5 kg Belastung: 24 g/min)
2,0 Gew.-% Maleinsäureanhydrid
wurde durch Mischen der Komponenten bei Temperaturen von 290 bis 310 °C in einem Zweischneckenextruder mit anschließender Entgasung hergestellt. Die Schmelze wurde durch ein Wasserbad geleitet, granuliert und getrocknet.

Komponente (B)

Roter Phosphor der mittleren Teilchengröße ($d_{50}$) von 10 bis 30 µm

Der Phosphor wurde mit Polyurethan (Astacin® Finish PUD, BASF Aktiengesellschaft) phlegmatisiert. Dazu wurden 500 ml einer wäßrig-alkalischen Phosphorsuspension mit einem Gehalt von 250 g rotem Phosphor (Teilchengröße 0,001 bis 0,4 mm) auf 60 °C erwärmt und durch Zugabe von 5 %iger Schwefelsäure auf einen pH-Wert von 8 eingestellt.

Dann wurden 6,5 g Astacin® Finish PUD (40 %ige wäßrige, anionische Polyester-Polyurethan-Dispersion, die gemäß DE-C3 26 45 779 hergestellt wurde) eingerührt. Die Suspension wurde anschließend eine Stunde bei 60 °C gerührt und danach filtriert. Der Filterrückstand wurde mit Wasser gewaschen und anschließend bei 100 °C im Stickstoffstrom getrocknet.

Der Polyurethangehalt betrug 1 Gew.%.

Komponente (B') (zum Vergleich)

Roter Phosphor der mittleren Teilchengröße ($d_{50}$) von 45 µm (Exolit® 385, Firma Hoechst). Der Phosphor enthielt 0,5 Gew.% Dioctylphthalat als Beschichtungsmittel.

Komponente (C)

Glasfasern mit einem Durchmesser von 10 µm.

Komponente (D1)

Ein Olefinpolymerisat aus:
59,8 Gew.% Ethylen,
35 Gew.% n-Butylacrylat,

4,5 Gew.% Acrylsäure und
0,7 Gew.% Maleinsäureanhydrid
mit einem Schmelzindex MFI von 10 g/10 min bei 190 °C und 2,16 kg Belastung.

Dieses Copolymerisat wurde durch Copolymerisation der Monomeren bei erhöhter Temperatur und erhöhtem Druck hergestellt.

Komponente (D2)

Ein Styrol-Butadien-Styrol-Dreiblockcopolymer mit einem Styrolgehalt von 30 Gew.-%.

Die Komponenten wurden auf einem Zweischneckenextruder bei 280 bis 320 °C abgemischt und in Wasserbad extrudiert. Komponente (D) wurde dabei erst in der Schmelze zugegeben. Nach Granulierung und Trocknung wurden auf einer Spritzgußmaschine Prüfkörper gespritzt und geprüft.

Der Brandtest erfolgte nach UL 94 an 1/16 Zoll Prüfkörpern mit üblicher Konditionierung. Der LOI (Lowest oxygen-Index) wurde nach ASTM D 2863-77 bestimmt.

Die Phosphorschädigungsrate (Anteile an löslichen Phosphorderivaten) wurde nach Lagerung der Formkörper in einem Wasserbad bei 60 °C bestimmt, wobei nach regelmäßigen Zeitabständen Wasserproben entnommen und der P-Gehalt bestimmt wurde.

Die Zugfestigkeit wurde nach DIN 53 455, die Schädigungsarbeit ($w_{50}$) am Testkästschen und an der Rundscheibe in Anlehnung an DIN 53 433, Teil 1 bestimmt; die Schlagzähigkeit $a_n$ wurde nach DIN 53 453 und die Kriechstromfestigkeit nach IEC 112 (1979) sowie die Kerbschlagzähigkeit (IZOD) nach ISO 180/4A bestimmt.

Die Zusammensetzung der Formmassen und die Ergebnisse sind der Tabelle zu entnehmen.

Tabelle

| Nr. | Zusammensetzung [Gew.%] | Brandverhalten nach UL 94 (1/16") | LOI | Phosphor-Schädigungsrate [ppm/10 Tage] | Zugfestigkeit [N/mm2] |
|---|---|---|---|---|---|
| 1 | 67,3 (A1) 7,0 (B) 25 (C) - 0,7 ZnO | V-0 | 24,8 | 20 | 175 |
| 2 | 60,2 (A1) 6,2 (B) 27 (C) 6 (D1) 0,6 ZnO | V-0 | 26,0 | 10 | 150 |
| 3 | 67,4 (A1) 6,8 (B) 25 (C) - 0,8 CdO | V-0 | 25,7 | 18 | 170 |
| 4* | 67,5 (A1) 6,9 (B') 25 (C) - 0,6 ZnO | V-0 | 25,6 | 25 | 160 |
| 5* | 60,0 (A1) 6,3 (B') 27 (C) 6 (D1) 0,7 ZnO | V-0 | 25,7 | 15 | 140 |

*) zum Vergleich

| Nr. | Zusammensetzung [Gew.%] | Schlagzähigkeit $a_n$ [$kJ/m^2$] | Schädigungsarbeit $w_{50}$ [Nm] Testkästchen | Schädigungsarbeit $w_{50}$ [Nm] Rundscheibe | CTI [Volt] |
|---|---|---|---|---|---|
| 1 | 67,3 (A1) 7,0 (B) 25 (C) - 0,7 ZnO | 43 | 1,1 | 2,4 | 425 |
| 2 | 60,2 (A1) 6,2 (B) 27 (C) 6 (D1) 0,6 ZnO | 50 | 4,0 | 3,0 | 525 |
| 3 | 67,4 (A1) 6,8 (B) 25 (C) - 0,8 CdO | 44 | 1,2 | 2,4 | 450 |
| 4* | 67,5 (A1) 6,9 (B') 25 (C) - 0,6 ZnO | 35 | 1,0 | 2,1 | 400 |
| 5* | 60,0 (A1) 6,3 (B') 27 (C) 6 (D1) 0,7 ZnO | 44 | 3,0 | 2,7 | 475 |

*) zum Vergleich

Tabelle

| Nr. | Zusammensetzung [Gew.%] | Brandverhalten nach UL 94 (1/16") | Izod-Kerbschlagzähigkeit [kJ/m2] 23°C | -40°C |
|---|---|---|---|---|
| 6 | 87 (A1) + (A2) *) 3 (B) 10 (D2) | V-0 | 12 | 4 |
| 7 | 84 (A1) + (A2) *) 4 (B) 12 (D2) | V-0 | 16 | 5 |
| 8 | 85 (A1) + (A2) *) 2 (B) 10 (D2) | V-0 | 15 | 4 |
| 9***) | 87 (A1) + (A2) *) + 3 (B') 10 (D2) | V-0 | 9 | 3 |
| 10***) | 85 (A1) + (A2) *) + 2 (B') 10 (D2) + 3 (X)**) | V-0 | 12 | 2 |

*) Mischungsverhältnis: 47 Gew.-% (A2) + 53 Gew.-% (A1)

**) Triphenylphosphinoxid

***) zum Vergleich

## Patentansprüche

1. Flammgeschützte thermoplastische Formmassen, enthaltend
   (A) 10 bis 99 Gew.% eines thermoplastischen Polyamids oder Polyesters oder Polyphenylenethers oder deren Mischungen,

(B) 1 bis 50 Gew.% einer Komponente B aus rotem Phosphor mit einer Teilchengröße bis zu 2 mm, welcher auf 100 Gewichtsteile des Phosphors 0,05 bis 5 Gewichtsteile eines Polyurethans oder Polyester-Polyurethans als Phlegmatisierungsmittel enthält, erhältlich durch Umsetzung einer wäßrigen Suspension des roten Phosphors mit einer wäßrigen Polyurethan- oder Polyester-Polyurethan-Dispersion,

(C) 0 bis 60 Gew.% eines faser- oder teilchenförmigen Füllstoffes oder Mischungen solcher Füllstoffe und

(D) 0 bis 20 Gew.% eines kautschukelastischen Polymerisats.

**2.** Flammgeschützte thermoplastische Formmassen nach Anspruch 1 aus
10 bis 94 Gew.% der Komponente (A)
1 bis 30 Gew.% der Komponente (B) und
5 bis 30 Gew.% der Komponente (C).

**3.** Flammgeschützte thermoplastische Formmassen nach Anspruch 1 aus
10 bis 93 Gew.% der Komponente (A)
1 bis 20 Gew.% der Komponente (B)
5 bis 50 Gew.% der Komponente (C) und
1 bis 20 Gew.% der Komponente (D).

**4.** Flammgeschützte thermoplastische Formmassen nach den Ansprüchen 1 bis 3, in denen der Anteil des Phlegmatisierungsmittels in der Komponente (B) 0,5 bis 1,5 Gewichtsteile pro 100 Gewichtsteile des Phosphors beträgt.

**5.** Flammgeschützte thermoplastische Formmassen nach den Ansprüchen 1 bis 4, in denen die Füllstoffe Glasfasern oder Wollastonit oder Mischungen dieser Stoffe sind.

**6.** Flammgeschützte thermoplastische Formmassen nach den Ansprüchen 1 bis
5, in denen der Polyester (Komponente (A)) eine Mischung aus 30 bis 99 Gew.% eines thermoplastischen Polyesters auf der Basis aromatischer Dicarbonsäuren und
1 bis 70 Gew.% eines Polycarbonats auf der Basis von aromatischen Dihydroxyverbindungen
ist.

**7.** Flammgeschützte thermoplastische Formmassen nach den Ansprüchen 1 bis 6, in denen die Komponente (A) eine Mischung aus
2 bis 98 Gew. eines Polyamids und
98 bis 2 Gew.% eines Polyesters enthält.

**8.** Flammgeschützte thermoplastische Formmassen nach den Ansprüchen 1 und 3 bis 7, in denen die Komponente (D) ein Olefinpolymerisat ist, welches aus

$d_1$) 40 bis 100 Gew.% mindestens eines $\alpha$-Olefins mit 2 bis 8 C-Atomen,

$d_2$) 0 bis 50 Gew.% eines Diens,

$d_3$) 0 bis 45 Gew.% eines primären oder sekundären $C_1$-$C_{12}$-Alkylesters der Acrylsäure oder Methacrylsäure oder Mischungen derartiger Ester,

$d_4$) 0 bis 40 gew.% eines säurefunktionellen und/oder eines latent säurefunktionellen Monomeren einer ethylenisch ungesättigten Mono- oder Dicarbonsäure,

$d_5$) 0 bis 40 Gew.% eines Epoxygruppen enthaltenen Monomeren und

$d_6$) 0 bis 5 Gew.% sonstiger radikalisch polymerisierbarer Monomeren

aufgebaut ist.

**9.** Verwendung der flammgeschützten thermoplastischen Formmassen gemäß den Ansprüchen 1 bis 8 zur Herstellung von Fasern, Folien und Formkörpern.

**10.** Formkörper, erhältlich aus flammgeschützten thermoplastischen Formmassen gemäß den Ansprüchen 1 bis 8.

## Claims

1. A flameproofed thermoplastic molding composition containing
   (A) 10-99% by weight of a thermoplastic polyamide or polyester or polyphenylene ether or a mixture thereof,
   (B) 1-50% by weight of a component B comprising of red phosphorus having a particle size of up to 2 mm which contains per 100 parts by weight of the phosphorus from 0.05 to 5 parts by weight of a polyurethane or polyester-polyurethane as phlegmatizer, obtainable by reacting an aqueous suspension of the red phosphorus with an aqueous polyurethane or polyester-polyurethane dispersion,
   (C) 0-60% by weight of a fibrous or particulate filler or a mixture thereof and
   (D) 0-20% by weight of an elastomeric polymer.

2. A flameproofed thermoplastic molding composition as claimed in claim 1, consisting of
   10-94% by weight of component (A),
   1-30% by weight of component (B) and
   5-30% by weight of component (C).

3. A flameproofed thermoplastic molding composition as claimed in claim 1, consisting of
   10-93% by weight of component (A),
   1-20% by weight of component (B),
   5-50% by weight of component (C) and
   1-20% by weight of component (D).

4. A flameproofed thermoplastic molding composition as claimed in any of claims 1 to 3, wherein the proportion of phlegmatizer in component (B) is from 0.5 to 1.5 parts by weight per 100 parts by weight of phosphorus.

5. A flameproofed thermoplastic molding composition as claimed in any of claims 1 to 4, wherein the filler comprises glass fibers or wollastonite or a mixture thereof.

6. A flameproofed thermoplastic molding composition as claimed in any of claims 1 to 5, wherein the polyester (component (A)) is a mixture of
   30-99% by weight of a thermoplastic polyester based on an aromatic dicarboxylic acid and
   1-70% by weight of a polycarbonate based on an aromatic dihydroxy compound.

7. A flameproofed thermoplastic molding composition as claimed in any of claims 1 to 6, wherein component (A) contains a mixture of
   2-98% by weight of polyamide and
   98- 2% by weight of polyester.

8. A flameproofed thermoplastic molding composition as claimed in any of claims 1 and 3 to 7, wherein component (D) is an olefin polymer formed from
   $d_1$) 40-100% by weight of at least one $\alpha$-olefin of from 2 to 8 carbon atoms,
   $d_2$) 0- 50% by weight of a diene,
   $d_3$) 0- 45% by weight of a primary or secondary $C_1$-$C_{12}$-alkyl ester of acrylic or methacrylic acid or a mixture thereof,
   $d_4$) 0- 40% by weight of an acid-functional and/or latently acid-functional monomer of an ethylenically unsaturated mono-or dicarboxylic acid,
   $d_5$) 0- 40% by weight of an epoxy-containing monomer and
   $d_6$) 0- 5% by weight of another free radical polymerizable monomer.

9. The use of a flameproofed thermoplastic molding material as claimed in any of claims 1 to 8 for producing fibers, films and moldings.

10. A molding obtainable from a flameproofed thermoplastic molding composition as claimed in any of claims 1 to 8.

## Revendications

1. Masses à mouler thermoplastiques ignifugées, contenant
   (A) 10 a 99% en poids d'un polyamide, d'un polyester ou d'un polyoxyphénylène thermoplastiques, ou de mélanges de ceux-ci,
   (B) 1 à 50% en poids d'un composant B constitué de phosphore rouge ayant une dimension de particules allant jusqu'a 2 mm, qui contient, pour 100 parties en poids du phosphore, 0,05 à 5 parties en poids d'un polyuréthanne ou d'un polyesterpolyuréthanne en tant qu'agent anti-déflagrant, obtenu par réaction d'une suspension aqueuse du phosphore rouge avec une dispersion aqueuse de polyuréthanne ou de polyester-polyuréthanne,
   (C) 0 à 60% en poids d'une charge sous forme de fibres ou de particules ou de mélanges de telles charges et
   (D) 0 a 20% en poids d'un produit de polyméristion élastique caoutchouteux.

2. Masses à mouler thermoplastiques ignifugées selon la revendication 1, contenant
   10 à 94% en poids du composant (A)
   1 à 30% en poids du composant (B) et
   5 à 30% en poids du composnt (C).

3. Masses à mouler thermoplastiques ignifugées selon la revendication 1, contenant
   10 à 93% en poids du composant (A)
   1 à 20% en poids du composant (B)
   5 à 50% en poids du composant (C) et
   1 à 20% en poids du composant (D).

4. Masses à mouler thermoplastiques ignifugées selon l'une quelconque des revendications 1 à 3, dans lesquelles la proportion de l'agent antidéflagrant dans le composant (B) est de 0,5 à 1,5 parties en poids pour 100 parties en poids du phosphore.

5. Masses à mouler thermoplastiques ignifugées selon l'une quelconque des revendications 1 à 4, dans lesquelles les charges sont des fibres de verre, de la wollastonite ou des mélanges de ces matières.

6. Masses à mouler thermoplastiques ignifugées selon l'une quelconque des revendications 1 à 5, dans lesquelles le polyester (composant (A)) est un mélange de
   30 à 99% en poids d'un polyester thermoplastique à base d'acide dicarboxylique aromatique et
   1 à 70% en poids d'un polycarbonate à base de composés dihydroxylés aromatiques.

7. Masses à mouler thermoplastiques ignifugées selon l'une quelconque des revendications 1 à 6, dans lesquelles le composant (A) contient un mélange de
   2 à 98% en poids d'un polyamide et
   98 à 2% en poids d'un polyester.

8. Masses à mouler thermoplastiques ignifugées selon l'une quelconque des revendications 1 et 3 à 7, dans lesquelles le composant (D) est un produit de polymérisation d'oléfines, qui est constitué à partir de
   $d_1$) 40 à 100% en poids d'au moins une $\alpha$-oléfine ayant 2 à 8 atomes de carbone,
   $d_2$) 0 à 50% en poids d'un diène,
   $d_3$) 0 à 45% en poids d'un ester d'alkyle primaire ou secondaire en $C_1$-$C_{12}$ de l'acide acrylique ou de l'acide méthacrylique, ou de mélanges de tels esters,
   $d_4$) 0 à 40% en poids d'un monomère à fonction acide et/ou à fonction acide latente d'un acide mono- ou dicarboxylique éthyléniquement insaturé,
   $d_5$) 0 à 40% en poids d'un monomère contenant un groupe époxy et
   $d_6$) 0 à 5% en poids d'autres monomères polymérisables par voie radicalaire.

9. Utilisation des masses à mouler thermoplastiques ignifugées selon l'une quelconque des revendications 1 à 8 pour la fabrication de fibres, feuilles et corps moulés.

**10.** Corps moulés, obtenus à partir de masses à mouler thermoplastiques ignifugés selon l'une quelconque des revendications 1 à 8.